# EUROPEAN PATENT APPLICATION

(11) **EP 4 657 602 A1**
(43) Date of publication of application: **03.12.2025**
(21) Application number: 25179127.3
(22) Date of filing: 27.05.2025
(51) Int. Cl.: H01M 10/42, H01M 50/531, H01M 50/586, H01M 50/595, H01M 10/0587

(54) **ELECTRODE AND SECONDARY BATTERY**

(30) Priority: 29.05.2024 KR 20240070090
(71) Applicant: SAMSUNG SDI CO., LTD., Yongin-si, Gyeonggi-do 17084 (KR)
(72) Inventor: Seino, Hiroshi, 16678 Suwon-si, Gyeonggi-do (KR); Ahn, Jeong Chull, 16678 Suwon-si, Gyeonggi-do (KR); Kim, Sang Hyun, 16678 Suwon-si, Gyeonggi-do (KR); Hong, Sun Yang, 16678 Suwon-si, Gyeonggi-do (KR)
(74) Representative: Gulde & Partner

(57) **Abstract**

The present disclosure relates to an electrode, and a technical problem to be solved is to provide an electrode capable of suppressing cracks from occurring in an uncoated portion. The present disclosure provides an electrode including: an electrode plate including a coated portion, which is a region in which an active material layer is applied on a substrate, and an uncoated portion, which is a region in which the active material layer is not applied on the substrate; a tab fixed to at least a part of the uncoated portion and protruding from the electrode plate; and a tape adjacent to the tab and attached onto the uncoated portion.

## Description

### BACKGROUND

### 1. Field

The present disclosure relates to an electrode and a secondary battery.

### 2. Description of the Related Art

Secondary batteries are batteries that can be charged and discharged, unlike primary batteries, which cannot be recharged. Low-capacity secondary batteries are used in small portable electronic devices such as smartphones, feature phones, notebook computers, digital cameras, and camcorders, while large-capacity secondary batteries are widely used as power sources for driving motors in hybrid vehicles and electric vehicles, and as power storage batteries. These secondary batteries include an electrode including a positive electrode and/or a negative electrode, an electrode assembly including the electrode, a case accommodating the electrode, an electrode terminal connected to the electrode assembly, and the like.

Secondary batteries may include a tab extending from the electrode assembly for collecting current during charging and discharging. For example, the tab is attached to a portion of the electrode assembly and extends from the electrode assembly (e.g., protrudes outward from the electrode assembly).

Secondary batteries can transmit continuous stress to the tabs and adjacent electrodes due to high volume expansion as they are repeatedly charged and discharged. In this case, cracks may occur in the electrode, which may block the passage of electrons participating in the intercalation and deintercalation of lithium into/from the electrode. Accordingly, electrons may not move efficiently from the electrode to the tab.

The inefficient movement of electrons may result in a problem of increased resistance of the secondary battery and/or decreased output. In some embodiments, the secondary battery may lose its utility and/or heat may be generated from the secondary battery, leading to a fire.

The above-described information is only intended to improve understanding of the background of the present disclosure and therefore may include information that does not constitute related art.

### SUMMARY

The invention is defined by the appended claims. The description that follows is subjected to this limitation. Any disclosure lying outside the scope of said claims is only intended for illustrative as well as comparative purposes.

Aspects according to some embodiments are directed toward an electrode and/or a secondary battery that suppresses crack generation.

However, the technical problem to be achieved by the present disclosure is not limited to the above-mentioned problems, and other problems not mentioned will be clearly understood by those skilled in the art from the following description. Additional aspects will be set forth in part in the description which follows and, in part, will be apparent from the description, or may be learned by practice of the presented embodiments of the disclosure.

According to some embodiments of the present disclosure for solving the above technical problem, an electrode includes an electrode plate including a coated portion, which is a region in which an active material layer is applied on a substrate, and an uncoated portion, which is a region in which the active material layer is not applied on the substrate; a tab fixed to at least a part of the uncoated portion and protruding from the electrode plate; and a tape adjacent to the tab and attached onto the uncoated portion.

According to some embodiments of the present disclosure for solving the above technical problem, a secondary battery includes an electrode assembly including a first electrode; a second electrode; and a separator between the first electrode and the second electrode; and a case accommodating the electrode assembly, and the first electrode includes an electrode plate including a coated portion, which is a region in which an active material layer is applied on a substrate, and an uncoated portion, which is a region in which the active material layer is not applied on the substrate; a tab fixed to at least a part of the uncoated portion and protruding from the electrode plate; and a tape adjacent to the tab and attached onto the uncoated portion.

### BRIEF DESCRIPTION OF THE DRAWINGS

The above and other objects, features and enhancements of the present disclosure will become more apparent to those of ordinary skill in the art by describing example embodiments thereof in more detail with reference to the accompanying drawings, in which:
FIG. 1 is a cross-sectional view schematically illustrating a cylindrical secondary battery according to some embodiments of the present disclosure;
FIG. 2 is a top view of an electrode without a tape attached according to some embodiments of the present disclosure;
FIG. 3 is a top view of an electrode according to some embodiments of the present disclosure;
FIG. 4 is a top view of an electrode according to some embodiments of the present disclosure;
FIG. 5 is a top view of an electrode according to some embodiments of the present disclosure;
FIG. 6A to FIG. 6C are each a cross-sectional view of an electrode according to some embodiments of the present disclosure; and
FIG. 7 is a cross-sectional view of a tape according to some embodiments of the present disclosure.

### DETAILED DESCRIPTION

Hereinafter, preferred embodiments of the present disclosure will be described in more detail with reference to the accompanying drawings. The terms or words used in the specification and claims should not be interpreted as limited to their usual or dictionary meanings, and should be interpreted in meanings and concepts that are consistent with the technical concept of the present disclosure based on the principle that the present inventor can appropriately define the concepts of the terms in order to explain her or her disclosure in its best way. Accordingly, it should be understood that the configurations shown in the drawings and the embodiments described herein are only preferred embodiments of the present disclosure and are not intended to represent all of the technical ideas of the disclosure, and that there may be various equivalents and modifications that may be substituted for them at the time of this application.

In addition, when used herein, the terms "comprise," and "include," and/or "comprising," and "including" specify the presence of stated features, numbers, steps, operations, members, elements and/or groups thereof, but do not exclude the presence or addition of one or more other features, numbers, operations, members, elements and/or groups thereof.

In addition, to aid understanding of the disclosure, the accompanying drawings are not drawn to scale and the dimensions of some components may be exaggerated. In some embodiments, the same reference numbers may be assigned to the same components in different embodiments.

When two things being compared are said to be the "same", it means they are "substantially the same." Therefore, "substantially the same" may include deviations that are considered low in the related art, for example, deviations of less than 5%. In addition, uniformity of a parameter in a given area may imply uniformity from an average point of view.

Although terms such as "first," "second," and the like are used to describe various components, these components are not limited by these terms. These terms are used only to distinguish one component from another, and unless specifically stated otherwise, it is to be understood that a first component may also be termed a second component.

Throughout the specification, unless specifically stated otherwise, each element may be singular or plural.

The arrangement of an arbitrary component on the "upper portion (or lower portion)" of a component or "above (or below)" the component refers to not only a case where the arbitrary component is disposed in contact with the upper surface (or lower surface) of the component, but also a case where other components may be interposed between the component and the arbitrary component disposed on (or under) the component.

In addition, when a component is described as being "connected," "coupled," or "linked" to another component, it is to be understood that the components may not only be directly coupled or connected to one another, but also that other components may be "interposed" between the components, or that each component may be "connected," "coupled," or "linked" through another component. In addition, when a part is "electrically coupled" to another part, this includes not only the case where the part is "directly connected" to the other part but also the case where it is "coupled" to the other part with another member or element interposed therebetween.

The expression "A and/or B" means A, B, or A and B, unless otherwise specified. That is, "and/or" includes all or any combination of the listed items. The expression "C to D" means C or more and D or less, unless otherwise specified.

The terminology used herein is for the purpose of describing embodiments of the present disclosure and is not intended to be limiting of the present disclosure.

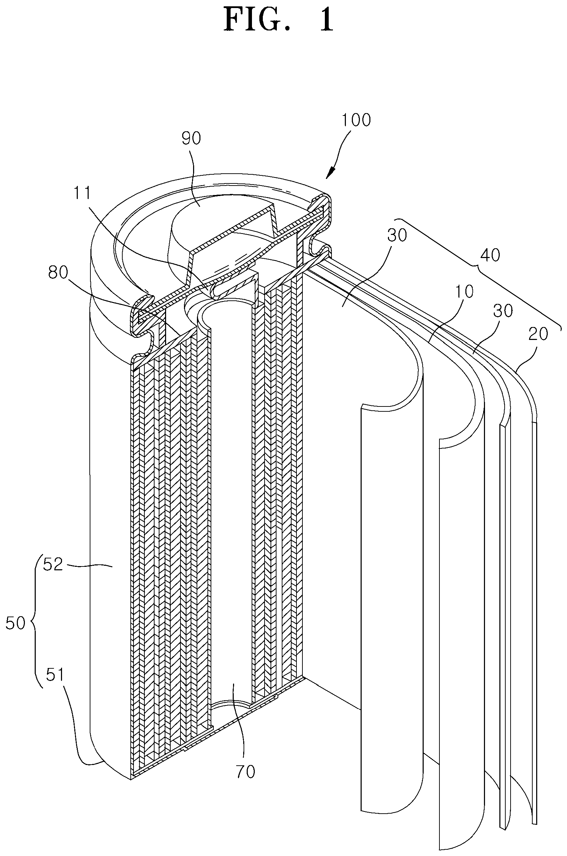

FIG. 1 is a cross-sectional view schematically illustrating a cylindrical secondary battery according to some embodiments of the present disclosure;

As shown in FIG. 1, a cylindrical lithium-ion secondary battery cell 100 according to some embodiments of the present disclosure may include a cylindrical case 50, an electrode assembly 40, and a cap assembly 90. In some embodiments, the cylindrical lithium-ion secondary battery cell 100 may further include a center pin 70. In some embodiments, in the secondary battery cell 100 according to embodiments of the present disclosure, the cap assembly 90 also performs a current interruption operation (e.g., functions as a current interruption device), therefore, in some cases, it is also referred to as a current interruption device.

The cylindrical case 50 may include a roughly (e.g., approximately or substantially) circular bottom portion 51 and a cylindrical side wall 52 extending a certain length upward from the circumference of the bottom portion 51. During the manufacturing process of the secondary battery, an upper portion of the cylindrical case 50 is open. Therefore, during the assembly process of the secondary battery, the electrode assembly 40 and the center pin 70 may be inserted into the cylindrical case 50 together with the electrolyte. The cylindrical case 50 may be manufactured from, for example, but not limited to, steel, stainless steel, aluminum, an aluminum alloy, or an equivalent thereof.

In some embodiments, the cylindrical case 50 may include a beading portion recessed inwardly at a lower portion centered on the cap assembly 90 to prevent the cap assembly 90 from being detached to the outside, and a crimping portion bent inwardly at an upper portion thereof.

The electrode assembly 40 may be accommodated inside the cylindrical case 50. The electrode assembly 40 may include a negative electrode plate 20 coated with a negative electrode active material (e.g., graphite, carbon, and the like) on a negative electrode current collector, a positive electrode plate 10 coated with a positive electrode active material (e.g., transition metal oxide (LiCoO₂, LiNiO₂, LiMn₂O₄, and the like)) on a positive electrode current collector, and a separator 30 positioned between the negative electrode plate 20 and the positive electrode plate 10 to prevent short circuits and allow only the movement of lithium ions therethrough. In some embodiments, the negative electrode plate 20, the positive electrode plate 10 and the separator 30 may be wound into a roughly (e.g., approximately or substantially) cylindrical shape. For example, but not limited to, the negative electrode current collector may be made of copper (Cu) foil, the positive electrode current collector may be made of aluminum (Al) foil, and the separator may be made of polyethylene (PE) or polypropylene (PP).

In some embodiments, a negative electrode tab that protrudes downward and extends a certain length may be welded to the negative electrode plate 20, and a positive electrode tab 11 that protrudes upward and extends a certain length may be welded to the positive electrode plate 10, but the negative electrode tab and the positive electrode tab 11 may also protrude in opposite directions from the described orientation. In some embodiments, for example, but not limited to, the negative electrode tab may be formed of copper (Cu) or nickel (Ni), and the positive electrode tab 11 may be formed of aluminum (Al).

In some embodiments, the negative electrode tab of the electrode assembly 40 may be welded to the bottom portion 51 of the cylindrical case 50. Therefore, the cylindrical case 50 may act as a negative electrode. In some embodiments, the positive electrode tab 11 may be welded to the bottom portion 51 of the cylindrical case 50, and in this case, the cylindrical case 50 may act as a positive electrode.

In some embodiments, a first insulating plate coupled to the cylindrical case 50 and having a first lower hole formed in the center and a second lower hole formed on the outside (e.g., peripheral) thereof may be interposed between the electrode assembly 40 and the bottom portion 51. This first insulating plate serves to prevent the electrode assembly 40 from making electrical contact with the bottom portion 51 of the cylindrical case 50. For example, the first insulating plate serves to prevent the positive electrode plate 10 of the electrode assembly 40 from making electrical contact with the bottom portion 51. Here, the first lower hole serves to allow the gas to (e.g., quickly) move upward through the center pin 70 when a large amount of gas is generated due to an abnormality in the secondary battery, and the second lower hole serves to allow the negative electrode tab to pass through and be welded to the bottom portion 51.

In some embodiments, a second insulating plate 80 coupled to a cylindrical case 50 and having a first upper hole formed in the center and a plurality of second holes formed on the outside (e.g., peripheral) thereof may be interposed between the electrode assembly 40 and the cap assembly 90. This second insulating plate 80 serves to prevent the electrode assembly 40 from making electrical contact with the cap assembly 90. For example, the second insulating plate 80 serves to prevent the negative electrode plate 20 of the electrode assembly 40 from making electrical contact with the cap assembly 90. Here, the first hole serves to allow the gas to move (e.g., quickly) to the cap assembly 90 when a large amount of gas is generated due to an abnormality in the secondary battery, and the second hole serves to allow the positive electrode tab to pass through and be welded to the cap assembly 90. In some embodiments, the remaining second holes serve to allow the electrolyte to (e.g., quickly) flow into the electrode assembly 40 during the electrolyte injection process.

In some embodiments, the diameters of the first hole of the first insulating plate and the first hole of the second insulating plate 80 are formed smaller than the diameter of the center pin 70, thereby preventing the center pin 70 from electrically contacting the bottom portion 51 of the cylindrical case 50 or the cap assembly 90 due to (e.g., when subjecting to) an external impact.

The center pin 70 has a hollow, circular pipe shape and may be coupled to the center or approximate center of the electrode assembly 40. The center pin 70 may be made of, for example, but not limited to, steel, stainless steel, aluminum, an aluminum alloy, or polybutylene terephthalate. Thes center pin 70 serves to suppress deformation of the electrode assembly 40 during charging and discharging of the secondary battery, and also serves as a passage for the gas generated inside the secondary battery. In some embodiments, the center pin 70 may be omitted.

The cap assembly 90 includes a cap up (e.g., a cap-up component). The cap assembly 90 may further include at least one of a cap down (e.g., a cap-down component), a vent, or an insulator. The cap assembly 90 is coupled to the opening of the case 50 to seal the electrode assembly 40 inside the case 50.

However, the present disclosure is not limited to this, and the case 50 may have various suitable shapes such as a circular or pouch-type shape. In some embodiments, the case 50 may be composed of a metal such as aluminum, an aluminum alloy, nickel-plated steel, or a laminate film or plastic (e.g., forming a pouch).

In some embodiments, the electrode assembly 40 includes a negative electrode formed of a negative electrode plate 20, a positive electrode formed of a positive electrode plate 10, and a separator 30 positioned between the negative electrode and the positive electrode. In some embodiments, the electrode assembly 40 is accommodated in a cylindrical case 50 together with an electrolyte. Hereinafter, the electrode assembly 40 and the electrolyte are described in more detail.

As the positive electrode active material, a compound capable of reversible intercalation and deintercalation of lithium (lithiated intercalation compound) may be used. For example, at least one composite oxide of lithium and a metal selected from cobalt, manganese, nickel, and a combination thereof may be used.

The composite oxide may be a lithium transition metal composite oxide, and examples thereof include lithium nickel-based oxides, lithium cobalt-based oxides, lithium manganese-based oxides, lithium iron phosphate-based compounds, cobalt-free nickel-manganese-based oxides, or a combination thereof.

As an example, a compound represented by any one of the following chemical formulas may be used. LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GeO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer includes a positive electrode active material and may further include a binder and/or a conductive material.

The content of the positive electrode active material may be 90 wt% to 99.5 wt% with respect to 100 wt% of the positive electrode active material layer, and the contents of the binder and conductive material may be 0.5 wt% to 5 wt%, respectively, based on 100 wt% of the positive electrode active material layer.

Al may be used as the current collector, but the present disclosure is not limited thereto.

The negative electrode active material includes a material capable of reversibly intercalating/deintercalating lithium ions, a lithium metal, an alloy of lithium metal, a material capable of doping and dedoping lithium, or a transition metal oxide.

The material capable of reversibly intercalating/deintercalating the lithium ions may be a carbon-based negative electrode active material, for example, crystalline carbon, amorphous carbon, or a combination thereof. Examples of the crystalline carbon include graphite such as natural graphite or artificial graphite, and examples of the amorphous carbon include soft carbon or hard carbon, mesophase pitch carbide, calcined coke, and the like.

As the material capable of doping and dedoping the lithium, a Si-based negative electrode active material or a Sn-based negative electrode active material may be used. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to one embodiment, the silicon-carbon composite may be in the form of silicon particles and amorphous carbon coated on the surface of the silicon particles.

The silicon-carbon composite may further include crystalline carbon. For example, the silicon-carbon composite may include a core including crystalline carbon and silicon particles and an amorphous carbon coating layer positioned on the surface of the core.

A negative electrode for a lithium secondary battery cell 100 includes a current collector and a negative electrode active material layer positioned on the current collector. The negative electrode active material layer includes a negative electrode active material and may further include a binder and/or a conductive material.

For example, the negative positive active material layer may include 90 to 99 wt% of the negative positive active material, 0.5 to 5 wt% of the binder, and 0 to 5 wt% of the conductive material.

The binder may be a non-aqueous binder, an aqueous binder, a dry binder, or a combination thereof. When using an aqueous binder as the negative electrode binder, a cellulose-based compound capable of imparting viscosity may be further included.

The negative electrode current collector may be selected from a copper foil, a nickel foil, a stainless steel foil, a titanium foil, a nickel foam, a copper foam, a polymer substrate coated with a conductive metal, and a combination thereof.

An electrolyte for the lithium secondary battery cell 100 contains a non-aqueous organic solvent and a lithium salt.

The non-aqueous organic solvent acts as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof, and may be used alone or in combination of two or more thereof.

In some embodiments, when using the carbonate-based solvent, a cyclic carbonate and a chain carbonate may be used in combination.

Depending on the type or kind of the lithium secondary battery cell 100, a separator may be positioned (e.g., present) between the positive and negative electrodes. As such a separator, polyethylene, polypropylene, polyvinylidene fluoride or a multilayer film of two or more thereof may be used.

The separator 30 may include a porous substrate, and a coating layer including an organic material, an inorganic material, or a combination thereof located on one surface or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic material and inorganic material may be mixed and present in one coating layer, or may be present in a laminated form with a coating layer including the organic material and a coating layer including the inorganic material.

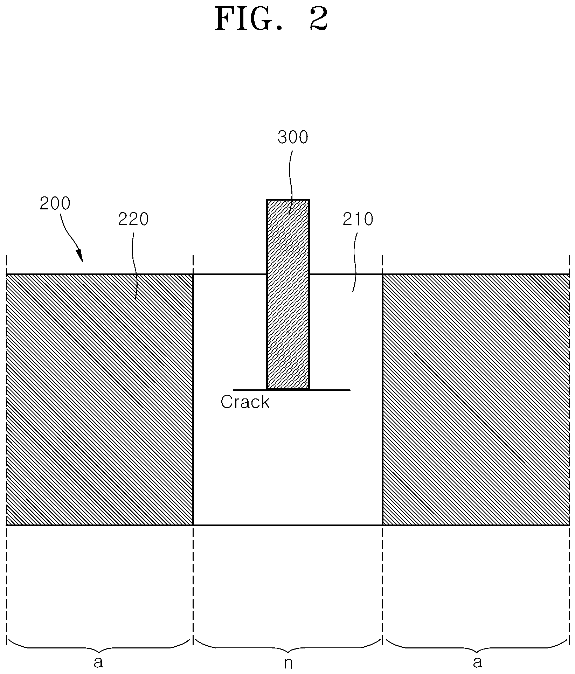

FIG. 2 is a top view of an electrode without a tape attached according to some embodiments of the present disclosure.

FIG. 2 shows the upper surface of the electrode. The electrode represents a first electrode or a second electrode. The first electrode represents, for example, the positive electrode described in connection with FIG. 1, and the second electrode represents, for example, the negative electrode described in connection with FIG. 1. Alternatively, the first electrode represents, for example, the negative electrode described in connection with FIG. 1, and the second electrode represents, for example, the positive electrode described in connection with FIG. 1.

In FIG. 2, reference numeral 200 represents an electrode plate. The electrode plate 200 includes a negative electrode plate 20 or a positive electrode plate 10. In FIG. 2, reference numeral 300 represents a tab.

The electrode plate 200 includes a substrate 210 and an active material layer 220 formed on at least one surface of the substrate 210. When the electrode plate 200 is a positive electrode plate 10, the substrate 210 includes, for example, aluminum. When the electrode plate 200 is a negative electrode plate 20, the substrate 210 includes, for example, copper. A detailed description of the substrate 210 and/or the active material layer 220 is the same as or similar to that described in connection with FIG. 1.

In some embodiments, the active material layer 220 may be formed on one surface of the substrate 210. Alternatively, the active material layer 220 may be formed on both surfaces of the substrate 210. In some embodiments, the active material layer 220 may be formed on at least a portion of one surface of the substrate 210. Hereinafter, for convenience of description, the area where the active material layer 220 is formed on the substrate 210 is called a coated portion a. The area where the active material layer 220 is not formed on the substrate 210 is called an uncoated portion n.

The tab 300 may be attached onto the electrode plate 200 and extend to the outside from the electrode plate 200. For example, the tab 300 has one side attached to the electrode plate 200 and the other side extending to the outside of the electrode plate 200. The tab 300 is attached to, for example, the uncoated portion n. For example, the tab 300 may be attached to the electrode plate 200 by welding one side onto the uncoated portion n.

Hereinafter, for convenience of description, the upper surface of the electrode refers to the surface of the electrode plate 200 on the side where the tab 300 is attached. However, the present disclosure is not limited thereto.

These electrodes may repeat swelling and sinking (e.g., expansion and shrinkage) activities as charging and discharging are repeated. As described in connection with FIG. 1, the first electrode and the second electrode may be formed in a wound state while overlapping each other. The first electrode and/or the second electrode may exert pressure on each other during the swelling and sinking process. For example, during this process, the tab 300 may exert pressure on the uncoated portion n to which the tab 300 is attached and/or to an adjacent electrode. Accordingly, the uncoated portion n, especially the uncoated portion n adjacent to the tab 300, is subjected to continuous stress. Accordingly, cracks may occur in the electrodes. Because the cracks result in an increase in the resistance of the secondary battery 100, the charge/discharge efficiency decreases and/or the stability of the secondary battery 100 decreases.

A method to prevent or substantially prevent the occurrence of such cracks will be described in more detail.

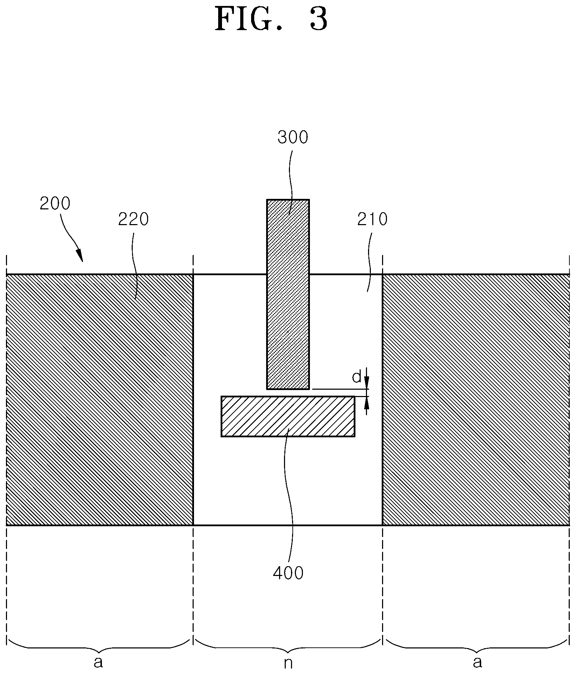

FIG. 3 is a top view of an electrode according to some embodiments of the present disclosure;

In FIG. 3, reference numeral 200 represents an electrode plate. The description of the electrode plate 200 is, for example, the same as or similar to the description of the electrode plates described in connection with FIGS. 1 and 2. In FIG. 3, reference numeral 300 represents a tab. The description of the tab 300 is, for example, the same as or similar to the description of the tabs described in connection with FIGS. 1 and 2. In FIG. 3, reference numeral 400 represents a tape.

An electrode according to some embodiments of the present disclosure includes an electrode plate 200, a tab 300, and a tape 400.

The electrode plate 200 includes a coated portion a and an uncoated portion n. The coated portion a represents an area where an active material layer 220 is applied on the substrate 210. The uncoated portion n represents an area where the active material layer 220 is not applied on the substrate 210.

The tab 300 is formed by being fixed to at least a part of the uncoated portion n and protruding from the electrode plate 200.

The tape 400 is attached onto the uncoated portion n. The tape 400 is attached adjacent to the tab 300. The tape 400 is, for example, attached to an area of the uncoated portion n that is expected to be pressurized by the tab 300 (e.g., due to a thickness and/or hardness difference in the area with the tab 300 and an adjacent area without the tab 300).

For example, when viewed from an upper surface of the electrode, the tape 400 is attached adjacent to the lower portion of the tab 300.

When attached as described, the tape 400 can prevent or substantially prevent cracks from occurring in the uncoated portion n. For example, the tape 400 is attached onto the uncoated portion n adjacent to the tab 300, thereby reducing the step (e.g., difference in thickness) between the area where the tab 300 is attached and the area where the tab 300 is not attached. In some embodiments, the tape 400 may be attached to the uncoated portion n without a lifting (e.g., raised) area by being positioned adjacent to the tab 300. Accordingly, the tape 400 can minimize or reduce the area of the uncoated portion n adjacent to the tab 300 but not covered by the tape 400, and prevent or substantially prevent cracks from occurring due to the tape 400.

The tape 400 is intended to prevent or substantially prevent cracks from occurring in the uncoated portion n, and may include, for example, a swelling material. The swelling material include a material that is capable of expanding in volume. The swelling material includes, for example, a material that swells by absorbing an electrolyte accommodated together with the electrode assembly 40 inside a secondary battery 100.

In some embodiments, the tape 400 is attached within a set or predetermined distance (d) from the tab 300 in the longitudinal direction of the tab 300. For example, the tape 400 may be attached spaced at a set or predetermined distance (d) apart from the tab 300. The tape 400 is attached within a set or predetermined distance (d) from the tab 300, and may be attached in direct contact with the tab 300 without being spaced apart from it.

The set or predetermined distance (d) represents the shortest distance from the tape 400 to the tab 300 when viewed from the upper surface of the electrode.

The set or predetermined distance (d) is, for example, 7 mm or less. Alternatively, for example, the set or predetermined distance (d) is 6 mm or less. Alternatively, for example, the set or predetermined distance (d) is 5 mm or less. Alternatively, for example, the set or predetermined distance (d) is 4 mm or less. Alternatively, for example, the set or predetermined distance (d) is 3 mm or less. Alternatively, for example, the set or predetermined distance (d) is 2 mm or less. Alternatively, for example, the set or predetermined distance (d) is 1 mm or less. Alternatively, for example, the set or predetermined distance (d) is 0.5 mm or less.

For example, when the tape 400 is attached to the lower portion of the tab 300 when viewed from the upper surface of the electrode, the tape 400 is attached within a set or predetermined distance (d) from the lower portion of the tab 300.

The tape 400 is attached onto the uncoated portion n. For example, as shown in FIG. 3, the tape 400 may be positioned within the uncoated portion n when viewed from the upper surface of the electrode. However, the area to which the tape 400 is attached is not limited thereto. For example, unlike what is shown in FIG. 3, the tape 400 may be positioned within at least a part of the coated portion a and the uncoated portion n when viewed from the upper surface of the electrode. That is, the tape 400 may be formed in any suitable size or shape as long as it does not overlap the tab 300.

In some embodiments, the width of the tape 400 is formed to be equal to or wider than the width of the tab 300. The width of the tape 400 is the length of the tape 400 in the longitudinal direction of the electrode plate 200. The width of the tab 300 is the length of the tab 300 in the width direction of the tab 300. As such, the tape 400 is formed to have the same width as the tab 300 or a wider width than the width of the tab 300, thereby more effectively preventing cracks from occurring in the uncoated portion n due to the end of the tab 300 (e.g., arranged on the uncoated portion n).

Through this configuration, the electrode according to some embodiments of the present disclosure can reduce the force that the end of the tab 300 applies to the electrode plate 200. Accordingly, the electrode according to some embodiments of the present disclosure can prevent or substantially prevent cracks from occurring in the electrode plate 200.

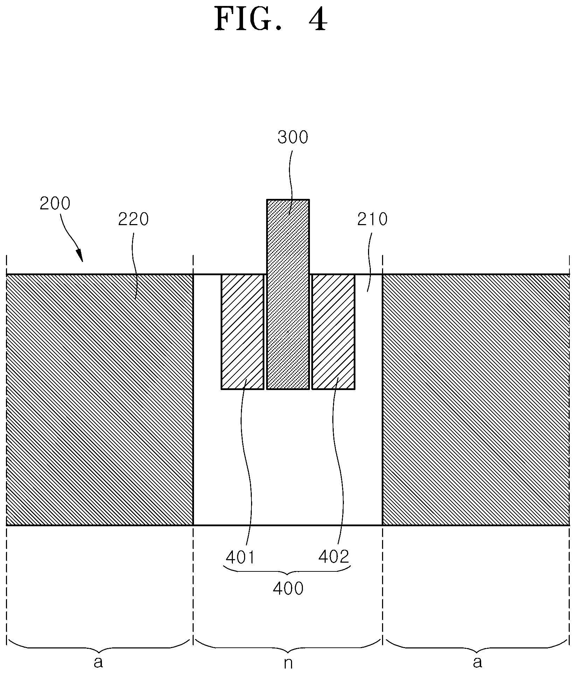

FIG. 4 is a top view of an electrode according to some embodiments of the present disclosure.

As described in connection with FIG. 3, the tape 400 is attached onto the uncoated portion n. The tape 400 is attached adjacent to the tab 300. The tape 400 is, for example, attached to an area of the uncoated portion n that is expected to be pressurized by the tab 300.

For example, when viewed from the upper surface of the electrode, the tape 400 may be formed adjacent to a side of the tab 300. For example, the tape 400 may be attached to at least one of the two sides (e.g., two opposing sides) of the tab 300 when viewed from the upper surface of the electrode. For example, the tape 400 includes a first tape 401 formed adjacent to one side of the tab 300. Alternatively, for example, the tape 400 includes a second tape 402 formed adjacent to the other side of the tab 300.

The electrode according to some embodiments of the present disclosure may include a first tape 401 or a second tape 402, or may include both a first tape 401 and a second tape 402. The electrode according to some embodiments of the present disclosure can prevent or substantially prevent cracks from occurring on the uncoated portion n due to the side of the tab 300.

In FIG. 3, the tape 400 is described as being attached within a set or predetermined distance (d) from the tab 300. This also applies equally or similarly to the tape 400 described in connection with FIG. 4. For example, the first tape 401 is attached within a set or predetermined distance (d) from one side of the tab 300. Alternatively, for example, the second tape 402 is attached within a set or predetermined distance (d) from the other side of the tab 300. The set or predetermined distance (d) is, for example, 7 mm or less. Alternatively, for example, the set or predetermined distance (d) is 6 mm or less. Alternatively, for example, the set or predetermined distance (d) is 5 mm or less. Alternatively, for example, the set or predetermined distance (d) is 4 mm or less. Alternatively, for example, the set or predetermined distance (d) is 3 mm or less. Alternatively, for example, the set or predetermined distance (d) is 2 mm or less. Alternatively, for example, the set or predetermined distance (d) is 1 mm or less. Alternatively, for example, the set or predetermined distance (d) is 0.5 mm or less. As such, the tape 400 is positioned in contact with the tab 300 and/or adjacent to the tab 300, thereby reducing the step (e.g., difference in thickness) between the tab 300 and the uncoated portion n. In some embodiments, the tape 400 can reduce the pressure applied to the uncoated portion n by the tab 300, thereby preventing or substantially preventing cracks from occurring in the uncoated portion n.

As shown in FIG. 4, one end of the tape 400 may be formed to correspond to one end of the tab 300. Therefore, when viewed from the upper surface of the electrode, one end of the tape 400 may be positioned on the same line as one end of the tab 300. Alternatively, one end of the tape 400 may be formed shorter than one end of the tab 300. Accordingly, the tape 400 suppresses crack formation at the side of the tab 300. However, unlike what is shown in FIG. 4, one end of the tape 400 may be formed longer than one end of the tab 300. Accordingly, the tape 400 can not only prevent or substantially prevent cracks from occurring at the side of the tab 300, but also prevent or substantially prevent horizontal cracks from occurring at the lower portion of the tab 300 or prevent or substantially prevent cracks from extending (e.g., propagating) from the lower portion of the tab 300.

As described in connection with FIG. 3, the tape 400 may be attached so as to be positioned on the uncoated portion n, and/or positioned on at least a part of the coated portion a and a part of the uncoated portion n.

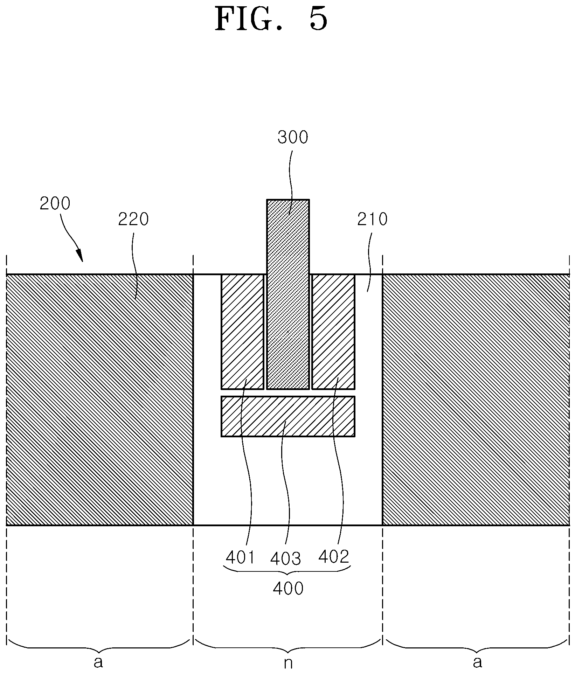

FIG. 5 is a top view of an electrode according to some embodiments of the present disclosure.

As described in connection with FIGS. 3 and 4, the tape 400 is attached onto the uncoated portion n. The tape 400 is attached adjacent to the tab 300. The tape 400 is, for example, attached to an area of the uncoated portion n that is expected to be pressurized by the tab 300.

For example, when viewed from the upper surface of the electrode, the tape 400 may be formed adjacent to the lower portion and the side of the tab 300. For example, the tape 400 may be attached adjacent to at least one of the two (e.g., opposing) sides of the tab 300 and the lower portion of the tab 300 when viewed from the upper surface of the electrode. For example, the tape 400 includes a first tape 401 formed adjacent to one side of the tab 300. Alternatively, for example, the tape 400 includes a second tape 402 formed adjacent to the other side of the tab 300. Alternatively, for example, the tape 400 includes a third tape 403 formed adjacent to the lower portion of the tab 300.

As shown in FIG. 5, the first tape 401 and the second tape 402 may be positioned such that one end thereof is on the same line as one end of the tab 300 or may be positioned shorter than one end of the tab 300. In some embodiments, the third tape 403 may be formed with a width wider than the width of the tab 300. Through this structure, the first tape 401, the second tape 402, and the third tape 403 may be attached to cover all areas adjacent to the sides and the lower portion of the tab 300.

Alternatively, unlike what is shown in FIG. 5, the first tape 401 and the second tape 402 may be positioned such that one end thereof is longer than one end of the tab 300. In some embodiments, the third tape 403 may be formed to have the same width as the tab 300, or the third tape 403 may be formed to have a narrower width than the width of the tab 300. Through this structure, the first tape 401, the second tape 402, and the third tape 403 may be attached to cover all areas adjacent to the sides and lower portion of the tab 300.

The tape 400 according to some embodiments of the present disclosure can prevent or substantially prevent cracks from occurring in the uncoated portion n due to the tab 300.

In some embodiments, the third tape 403 may be attached on the uncoated portion n so as not to overlap the first tape 401 and/or the second tape 402. For example, the third tape 403 may be attached on the uncoated portion n so as to be in direct contact with or may be spaced apart from the first tape 401 and/or the second tape 402. The tape 400 according to some embodiments of the present disclosure can prevent or substantially prevent a step (e.g., difference in thickness) from occurring on the uncoated portion n due to overlapping of the tape 400.

As described in connection with FIGS. 3 and 4, the tape 400 is attached within a set or predetermined distance (d) from the tab 300. For example, the first tape 401 is attached within a set or predetermined distance (d) from one side of the tab 300. Alternatively, for example, the second tape 402 is attached within a set or predetermined distance (d) from the other side of the tab 300. Alternatively, for example, the third tape 403 is attached within a set or predetermined distance (d) from the lower portion of the tab 300. The set or predetermined distance (d) is, for example, 7 mm or less. Alternatively, for example, the set or predetermined distance (d) is 6 mm or less. Alternatively, for example, the set or predetermined distance (d) is 5 mm or less. Alternatively, for example, the set or predetermined distance (d) is 4 mm or less. Alternatively, for example, the set or predetermined distance (d) is 3 mm or less. Alternatively, for example, the set or predetermined distance (d) is 2 mm or less. Alternatively, for example, the set or predetermined distance (d) is 1 mm or less. Alternatively, for example, the set or predetermined distance (d) is 0.5 mm or less. As such, the tape 400 is positioned in direct contact with the tab 300 and/or adjacent to the tab 300, thereby reducing the step (e.g., difference in thickness) between the tab 300 and the uncoated portion n. In some embodiments, the tape 400 can reduce the pressure applied to the uncoated portion n by the tab 300, thereby preventing or substantially preventing cracks from occurring in the uncoated portion n.

As described in connection with FIGS. 3 and 4, the tape 400 may be attached so as to be positioned on the uncoated portion n, and/or positioned on at least a part of the coated portion a and the uncoated portion n.

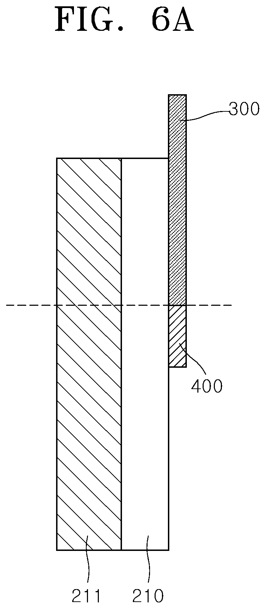

FIG. 6A to FIG. 6C are each a cross-sectional view of an electrode according to some embodiments of the present disclosure.

Through FIGS. 3 to 5, the tape 400 positioned adjacent to a tab 300 and attached to an uncoated portion n is described. FIG. 6A to FIG. 6C describe various examples of locations where the tape 400 is attached.

In FIG. 6A to FIG. 6C, reference numeral 210 represents a substrate, reference numeral 300 represents a tab, and reference numeral 400 represents a tape. Also, reference numeral 211 in FIG. 6A to FIG. 6C represents the substrate of another electrode. For example, if (e.g., when) reference numeral 210 represents the substrate of the positive electrode 10, reference numeral 211 represents the substrate of the negative electrode 20. For example, if (e.g., when) reference numeral 210 represents the substrate of the negative electrode 20, reference numeral 211 represents the substrate of the positive electrode 10.

Although FIG. 6A to FIG. 6C illustrates only a tape 400 attached adjacent to the lower portion of the tab 300, the examples described in connection with FIG. 6A to FIG. 6C can be applied to a tape 400 attached adjacent to the side(s) and/or lower portion of the tab 300.

FIG. 6A shows an example in which a tape 400 is attached to a surface on which a tab 300 is attached in an uncoated portion n. For example, the tab 300 and the tape 400 are positioned on one surface of the uncoated portion n. In this case, the tape 400 can effectively prevent or substantially prevent cracks from occurring in the substrate 210 by the tab 300 while reducing the step (e.g., difference in thickness) between the tab 300 and the substrate 210.

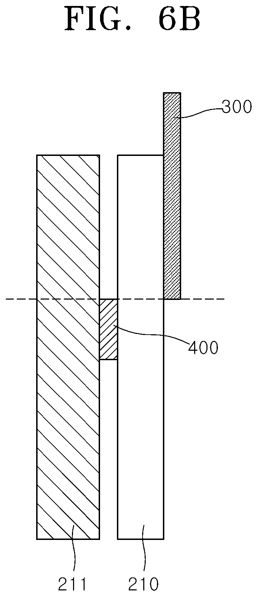

FIG. 6B shows an example in which a tape 400 is attached to a surface on which a tab 300 is not attached in the uncoated portion n.

For example, the tab 300 is positioned on one surface of the uncoated portion n, and the tape 400 is positioned on the other (e.g., opposing) surface of the uncoated portion n. That is, the tape 400 may be attached to a surface other than the surface on which the tab 300 is coupled on the uncoated portion n. For example, the tape 400 may be attached adjacent to the tab 300 on a different surface from the surface to which the tab 300 is coupled. Therefore, as shown in FIG. 6B, one end of the tab 300 and one side of the tape 400 may be positioned on the same line in the thickness direction of the electrode. Alternatively, one side of the tape 400 may be positioned within a set or predetermined distance (d) from one end of the tab 300. The set or predetermined distance (d) is, for example, 7 mm or less. Alternatively, for example, the set or predetermined distance (d) is 6 mm or less. Alternatively, for example, the set or predetermined distance (d) is 5 mm or less. Alternatively, for example, the set or predetermined distance (d) is 4 mm or less. Alternatively, for example, the set or predetermined distance (d) is 3 mm or less. Alternatively, for example, the set or predetermined distance (d) is 2 mm or less. Alternatively, for example, the set or predetermined distance (d) is 1 mm or less. Alternatively, for example, the set or predetermined distance (d) is 0.5 mm or less.

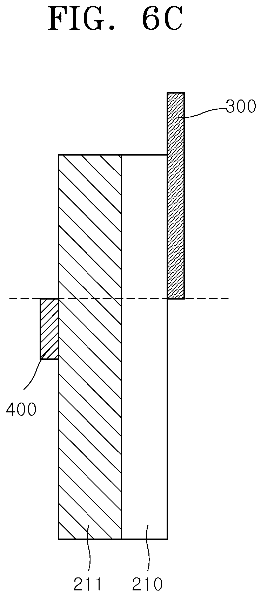

FIG. 6C shows an example in which a tape 400 is attached to the substrate 211 of the other electrode.

For example, the substrate 210 is a substrate (current collector) of the first electrode. The substrate 211 of the other electrode is a substrate (current collector) of the second electrode. When the first electrode is, for example, a positive electrode, the second electrode is, for example, a negative electrode. In this case, the substrate 210 contains aluminum, and the substrate 211 of the other electrode includes copper. In an embodiment, in FIG. 6C, the separator 30 is omitted for convenience of explanation, but the separator 30 may be positioned between the substrate 210 of the first electrode and the substrate 211 of the second electrode.

For example, the tab 300 is positioned on one surface of the substrate 210, and the tape 400 is positioned on one surface of another substrate 211. That is, the tape 400 may be attached to a different electrode than the tab 300. As shown in FIG. 6C, one end of the tab 300 and one side of the tape 400 may be positioned on the same line in the thickness direction of the electrode. Alternatively, one side of the tape 400 may be positioned within a set or predetermined distance (d) from one end of the tab 300. The set or predetermined distance (d) is, for example, 7 mm or less. Alternatively, for example, the set or predetermined distance (d) is 6 mm or less. Alternatively, for example, the set or predetermined distance (d) is 5 mm or less. Alternatively, for example, the set or predetermined distance (d) is 4 mm or less. Alternatively, for example, the set or predetermined distance (d) is 3 mm or less. Alternatively, for example, the set or predetermined distance (d) is 2 mm or less. Alternatively, for example, the set or predetermined distance (d) is 1 mm or less. Alternatively, for example, the set or redetermined distance (d) is 0.5 mm or less.

In some embodiments, the tape 400 according to some embodiments of the present disclosure may also be formed by a combination of two or more of the examples described in connection with FIGS. 6A to 6C. For example, the tape 400 may be attached to a surface of the uncoated portion n to which the tab 300 is attached while simultaneously or concurrently being attached to a surface of the uncoated portion n to which the tab 300 is not attached. Alternatively, for example, the tape 400 may be attached to the surface on which the tab 300 is attached in the uncoated portion n while simultaneously or concurrently being attached to the substrate 211 of another electrode.

As such, the tape 400 according to some embodiments of the present disclosure can more effectively prevent cracks from occurring in the electrode.

In some embodiments, the electrode according to some embodiments of the present disclosure described in connection with FIGS. 3 to 6 may further include a protective layer. The protective layer is provided, for example, while covering (e.g., to cover) the tab 300 on the uncoated portion n. The protective layer may be formed on the upper surface of the electrode, for example, to have the same size as the tab 300. Alternatively, the protective layer may be formed on the upper surface of the electrode, for example, to have a size narrower than the uncoated portion n while covering the tab 300. Alternatively, the protective layer may be formed on the upper surface of the electrode, for example, to have the same size as the uncoated portion n while covering the tab 300. Alternatively, the protective layer may be formed on the upper surface of the electrode, for example, to have a size larger than the uncoated portion n while covering the tab 300, and at least a part of the protective layer may be positioned on the coated portion a. Alternatively, the protective layer may be formed on the upper surface of the electrode, for example, to have a size smaller than the uncoated portion n while covering the tab 300, but at least a part of the protective layer may be positioned on the coated portion a.

The protective layer may protect, for example, the tab 300 from the outside. The protective layer may include, for example, an insulating material to prevent or substantially prevent the tab 300 and/or the electrode plate 200 from being damaged by an external impact and/or from being short-circuited by another electrode plate.

The insulating material is a material having insulating properties, and includes at least one selected from the group consisting of polysulfone, polyurethane, polyamide, 6,6-nylon, polycarbonate (PC), polytetrafluoroethylene (PTFE), polymethyl methacrylate (PMMA), and polyethylene terephthalate (PET).

Through this (e.g., providing the protective layer to cover the tab 300 on the uncoated portion n.), the electrode according to some embodiments of the present disclosure provides a method for protecting the electrode plate 200 and/or the tab 300. That is, a method for protecting the electrode plate 200 and/or the tab 300 includes providing the protective layer to cover the tab 300 on the uncoated portion n.

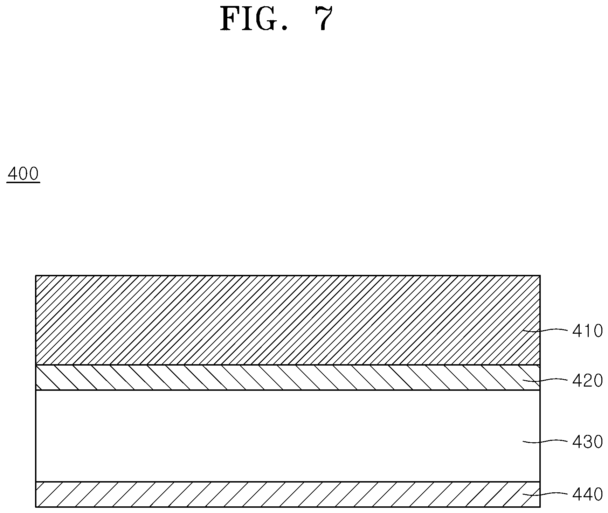

FIG. 7 is a cross-sectional view of a tape according to some embodiments of the present disclosure.

In FIG. 7, reference numeral 410 represents a swelling layer. In FIG. 7, reference numeral 420 represents an adhesive layer. In FIG. 7, reference numeral 430 represents an intermediate layer. In FIG. 7, reference numeral 440 represents an adhesive layer.

The tape 400 according to some embodiments of the present disclosure includes a swelling layer 410.

The swelling layer 410 includes, for example, a swelling material. For example, the swelling layer 410 may be formed only of a swelling material (e.g., the swelling layer 410 consists of the swelling material). Alternatively, for example, the swelling layer 410 may be formed by adding a swelling material to a non-swelling resin. The non-swelling resin includes, for example, polypropylene (PP). The swelling material is a material that expands in volume (e.g., is capable of expanding in volume). The swelling material swells by absorbing, for example, an electrolyte. The swelling material is at least one selected from the group consisting of, for example, fluorine-based resins such as PVDF, urethane, polymethyl methacrylate (PMMA), acrylic resins such as polyacrylonitrile (PAN), and a combination thereof. The resin is formed in the form of a homopolymer or a copolymer. In an embodiment, the resin is formed in the form of a copolymer. Accordingly, the swelling layer 410 can have improved swelling properties.

The swelling layer 410 has, for example, a swelling amount of 5 vol% or more. The swelling amount represents the degree of swelling in the thickness direction of the tape 400.

The swelling layer 410 may be formed, for example, in the shape of a film (sheet) including the swelling material.

The tape 400 according to some embodiments of the present disclosure may further include a first adhesive layer 420. For example, the tape 400 may further include a first adhesive layer 420 between the swelling layer 410 and the substrate 210 to attach the swelling layer 410 to the substrate 210.

However, the tape 400 can fix the swelling layer 410 to the substrate 210 without the first adhesive layer 420. For example, the swelling layer 410 can be fixed on the substrate 210 through the electrostatic force of the swelling layer 410 itself. That is, the first adhesive layer 420 is formed on the lower surface of the swelling layer 410 and adheres the swelling layer 410 and the uncoated portion n.

For this purpose, the first adhesive layer 420 includes an adhesive material. The adhesive material is, for example, at least one selected from the group consisting of acrylic adhesives, rubber adhesives, silicone adhesives, hot melt adhesives, and a combination thereof.

In an embodiment, the first adhesive layer 420 may also have swelling properties and may expand, for example by absorbing an electrolyte. The first adhesive layer 420 may contribute to suppressing crack generation in the tape 400.

The tape 400 according to some embodiments of the present disclosure may include an intermediate layer 430. The intermediate layer 430 may be positioned below the first adhesive layer 420, which is positioned below the swelling layer 410, as shown in FIG. 7. The intermediate layer 430 is bonded to the swelling layer 410 by the first adhesive layer 420. The tape 400 may include a second adhesive layer 440 between the intermediate layer 430 and the substrate 210 in order to attach the intermediate layer 430 and the substrate 210 to each other. However, unlike what is shown in FIG. 7, the intermediate layer 430 may be positioned on an upper portion of the swelling layer 410, and in this case, the second adhesive layer 440 may be positioned between the intermediate layer 430 and the swelling layer 410 to adhere the intermediate layer 430 and the swelling layer 410 to each other.

The intermediate layer 430 includes a material that improves the strength of the tape. The intermediate layer 430 includes, for example, at least one selected from the group consisting of PET, PBT, PI, and a combination thereof.

The second adhesive layer 440 includes an adhesive material. The adhesive material is, for example, at least one selected from the group consisting of acrylic adhesives, rubber adhesives, silicone adhesives, hot melt adhesives, and a combination thereof.

In some embodiments, the second adhesive layer 440 may also have swelling properties and may expand, for example by absorbing an electrolyte. The second adhesive layer 440 may contribute to suppressing crack generation in the tape 400.

Although not illustrated, the tape 400 according to some embodiments of the present disclosure may further include additives. The additive may be added to, for example, at least one of the swelling layer 410, the first adhesive layer 420, the intermediate layer 430, or the second adhesive layer 440. The additive includes, for example, a material that absorbs heat. The additive is, for example, at least one selected from the group consisting of alumina, boehmite, fine particles of acrylic resin, and a combination thereof. The additive can contribute to further improving the swelling properties of the tape 400. In some embodiments, the additive can also contribute to improving the sensor identification capability of the process, such as by adding pigments.

In an embodiment, a secondary battery 100 according to some embodiments of the present disclosure may include the electrodes described in connection with FIGS. 2 to 7. In some embodiments, the secondary battery 100 may include the tape 400 described in connection with FIGS. 2 to 7.

Hereinafter, experimental values for electrodes according to some embodiments of the present disclosure are shown in Table 1.

**Table 1**

| | Predetermi ned distance (mm) | Lower portion tape | | Side tape | | Swelling amount (vol%) | Crack generation probability (%) |
|---|---|---|---|---|---|---|---|
| | | W (mm) | L (mm) | W (mm) | L (mm) | | |
| Comparati ve Example | - | - | - | - | - | - | 98 |
| Example 1 | 0.5 | 2 | 8 | - | - | 1 | 97 |
| Example 2 | 0.5 | 2 | 8 | - | - | 3 | 96 |
| Example 3 | 0.5 | 2 | 8 | - | - | 6 | 69 |
| Example 4 | 0.5 | 2 | 8 | - | - | 22 | 42 |
| Example 5 | 0.5 | 2 | 8 | - | - | 42 | 21 |
| Example 6 | 0.5 | 2 | 8 | - | - | 86 | 0 |
| Example 7 | 0.5 | 2 | 8 | - | - | 103 | 5 |
| Example 8 | 0.5 | 2 | 8 | - | - | 183 | 30 |
| Example 9 | 1 | 2 | 8 | - | - | 86 | 0 |
| Example 10 | 3 | 2 | 8 | - | - | 85 | 5 |
| Example 11 | 5 | 2 | 8 | - | - | 86 | 12 |
| Example 12 | 7 | 2 | 8 | - | - | 86 | 58 |
| Example 13 | 0.5 | 3 | 8 | - | - | 86 | 0 |
| Example 14 | 0.5 | 6 | 8 | - | - | 85 | 0 |
| Example 15 | 0.5 | 6 | 15 | - | - | 84 | 0 |
| Example 16 | 0.5 | 6 | 30 | - | - | 82 | 0 |
| Example 17 | 0.5 | 2 | 30 | - | - | 85 | 0 |
| Example 18 | 0.5 | 2 | 8 | - | - | 38 | 13 |
| Example 19 | 0.5 | 2 | 8 | - | - | 64 | 19 |
| Example 20 | 0.5 | 2 | 8 | - | - | 76 | 3 |
| Example 21 | 0.5 | 2 | 8 | 2 | 38 | 86 | 0 |
| Example 22 | 0.5 | - | - | 2 | 38 | 86 | 4 |

In Table 1, the comparative example represents an electrode in which a tape 400 is not attached to an electrode plate 200. In some embodiments, Examples 1 to 22 show electrodes in which a tape 400 according to some embodiments of the present disclosure is attached to an electrode plate 200.

In Comparative Example and Examples 1 to 22, examples in which the tape 400 has a width of 4 mm, the length of the tab located on the substrate 210 is 40 mm, and the width of the uncoated portion n is 36 mm are shown.

In Examples 1 to 22, the thickness of the tape 400 is 25 um, and the tape 400 includes a swelling layer 410 and a 5 um first adhesive layer 410 that adheres the swelling layer 410 and the substrate 210.

Examples 1 to 20 show examples in which the tape 400 is positioned adjacent to the lower portion of the tab 300. Examples 1 to 17 show examples in which the tape 400 includes a swelling layer 410 and the swelling material is P(VDF-HFP). P(VDF-HFP) is a poly (vinylidene fluoride-hexafluoropropylene) copolymer. Example 18 shows an example in which a swelling layer 410 is included and the swelling material is PMMA. Example 19 shows an example in which a swelling layer 410 is included and the swelling material is PAN. Example 20 shows an example in which a swelling layer 410 and an intermediate layer 430 are included, the swelling material is VDF-HFP, and the intermediate layer 430 is 5 um of PET.

Examples 21 and 22 illustrate examples in which the tape 400 is positioned adjacent to both sides of the tab 300. Examples 21 and 22 show examples in which the tape 400 includes a swelling layer 410 and the swelling material is P(VDF-HFP).

In Table 1, W (mm) represents the length of the short side of the tape 400, and L (mm) represents the length of the long side of the tape 400.

In Table 1, the swelling amount is a value calculated by the expansion ratio in the thickness direction of the tape 400 through ((thickness after expansion - thickness before expansion)/(thickness before expansion)). That is, the swelling amount is a value calculated by dividing the amount of increase in thickness due to swelling by the thickness before swelling.

According to the present disclosure, an electrode and/or secondary battery with improved safety can be provided.

However, the effects obtainable through the present disclosure are not limited to the effects described above, and other technical effects not mentioned will be clearly understood by those skilled in the art from the description of the disclosure described above.

In the context of the present application and unless otherwise defined, the terms "use," "using," and "used" may be considered synonymous with the terms "utilize," "utilizing," and "utilized," respectively.

The use of "may" when describing embodiments of the inventive concept refers to "one or more embodiments of the inventive concept."

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

## Claims

1. An electrode comprising:
an electrode plate (200) comprising a coated portion (a), which is a region in which an active material layer (220) is applied on a substrate (210), and an uncoated portion (n), which is a region in which the active material layer (220) is not applied on the substrate (210);
a tab (300) fixed to at least a part of the uncoated portion (n) and protruding from the electrode plate (200); and
a tape (400) adjacent to the tab (300) and attached onto the uncoated portion (n).

2. The electrode as claimed in claim 1, wherein the tab (300) and the tape (400) are positioned on a same surface of the uncoated portion (n).

3. The electrode as claimed in claim 1, wherein the tab (300) is positioned on a first surface of the uncoated portion (n), and the tape (400) is positioned on a second surface of the uncoated portion (n).

4. The electrode as claimed in claim 1, wherein the tape (400) is attached within a set distance from the tab (300) in a longitudinal direction of the tab (300).

5. The electrode as claimed in claim 4, wherein the set distance is 7 mm or less.

6. The electrode as claimed in claim 1, wherein the tape (400) comprises a swelling layer (410) comprising a swelling material configured to absorb an electrolyte and swell, and the swelling layer (410) has a swelling amount of 5 vol% or more.

7. The electrode as claimed in claim 6, wherein the tape (400) further comprises an adhesive layer (420) formed on a lower surface of the swelling layer (410) to adhere the swelling layer (410) and the uncoated portion (n) together.

8. The electrode as claimed in claim 7, wherein the tape (400) further comprises an intermediate layer (430) positioned between the swelling layer (410) and the adhesive layer (420), which enhances a strength of the tape (400).

9. The electrode as claimed in claim 7, wherein at least one of the swelling layer (410) or the adhesive layer (420) further comprises an additive that absorbs heat.

10. The electrode as claimed in claim 1, wherein when viewed from an upper surface, the tape (400) is positioned within the uncoated portion (n).

11. The electrode as claimed in claim 1, wherein when viewed from an upper surface, the tape (400) is positioned within at least a part of the coated portion (a) and the uncoated portion (n).

12. The electrode as claimed in claim 1, wherein the electrode further comprises a protective layer provided on the uncoated portion (n) and covering the tab (300).

13. The electrode as claimed in claim 1, wherein when viewed from an upper surface, the tape (400) is attached adjacent to a lower portion of the tab (300).

14. The electrode as claimed in claim 1, wherein when viewed from an upper surface, the tape (400) is attached adjacent to at least one selected from among two opposing sides of the tab (300).

15. A secondary battery (100) comprising:
an electrode assembly (40) comprising a first electrode; a second electrode; and a separator (30) between the first electrode and the second electrode; and
a case (50) accommodating the electrode assembly (40),
wherein the first electrode comprises:
an electrode plate (200) comprising a coated portion (a), which is a region in which an active material layer (220) is applied on a substrate (210), and an uncoated portion (n), which is a region in which the active material layer (220) is not applied on the substrate (210);
a tab (300) fixed to at least a part of the uncoated portion (n) and protruding from the electrode plate (200); and
a tape (400) adjacent to the tab (300) and attached onto the uncoated portion (n).
